# EUROPEAN PATENT SPECIFICATION

(11) **EP 2 303 042 B1**
(45) Date of publication and mention of the grant of the patent: **08.02.2012**
(21) Application number: 08748808.6
(22) Date of filing: 26.05.2008
(51) Int. Cl.: A23P 1/12, A23G 4/20, A23G 4/04, A23G 3/20

(54) **CONTINUOUS FORMATION OF CENTER-FILLED CHEWING GUM**
KONTINUIERLICHE BILDUNG VON MITTIG GEFÜLLTEM KAUGUMMI
FABRICATION EN CONTINU DE CHEWING-GUM FOURRÉ

(43) Date of publication of application: 06.04.2011
(73) Proprietor: Gumlink A/S, 7100 Vejle (DK)
(72) Inventor: CHRISTENSEN, Per, Henrik, Ertebjerg, 5250 Odense SV (DK); HANSEN, Erik, 7100 Vejle (DK)
(74) Representative: Mikkelsen, Hans Kristian Saaby
(86) International application number: PCT/DK2008/000197
(87) International publication number: WO 2009/143840

(56) References cited:
- WO-A-2007/044628
- WO-A-2007/106055
- WO-A-2007/130915
- FR-A- 2 745 521
- US-B1- 6 245 369

## Description

### FIELD OF THE INVENTION

The present invention relates to a system and method for continuously forming center-filled gum, particularly for continuously forming pieces of liquid-filled gum from a continuous gum rope, i.e. a rope comprising gum material.

### BACKGROUND OF THE INVENTION

There are numerous mechanisms and systems known today for forming liquid-filled gum and other confectionery products. One of these systems is shown, for example, in U.S. Patent No. 3,857,963 to Graff et al. Although many of these known mechanisms and processes operate satisfactorily and produce acceptable results, there are a number of mechanical and processing concerns which need improvement.

Likewise international patent application WO 2007/106055 Bunkers, Joseph et al. discloses a system for forming individual pieces of chewing gum from a continuous gum rope.

Likewise international patent application WO 2007/130915 discloses an apparatus and method for the production of center-filled confectionery pieces.

It is an object of the present invention to provide improved mechanism and systems for producing center-filled gum products.

It is also an object of the present invention to provide improved systems for smoothly and continuously producing pieces of center-filled gum from continuous ropes or strands of gum material.

These and other objects are met by the unique and inventive gum-forming mechanisms, systems and methods in accordance with the present invention. The systems include extrusion and gum-forming mechanisms which produce center-filled gum pieces on a faster, more efficient and less costly basis.

### SUMMARY OF THE INVENTION

The invention relates to a system for producing pieces of center-filled chewing gum comprising:
an extruder,
at least one measuring apparatus, and
a control system,
wherein said extruder is suitable for extruding a gum rope having geometrical characteristics,
wherein said at least one measuring apparatus is suitable for measureing data related to at least one of said geometrical characteristics of said extruded gum rope,
wherein said control system is adapted to regulate, on the basis of said measured data, at least one geometrical characteristics of said gum rope by controlling the extruder speed,
wherein said system comprises a conveyor for conveying said gum rope between said extruder and said at least one measuring apparatus, and wherein said conveyor is an air conveyor.

According to the present invention it has been realized that by using measured data of at least one geometrical characteristic e.g. the diameter of the gum rope, and using these data to control the extruder speed, a more steady and continuous motion of the gum rope may be obtained as compared to prior art systems. The need to adjust the speed of the gum rope on the table member, known from prior art, has been avoided, in that all adjustment is carried out in the extruder and all motion from the extruder and forth may happen steady and smooth.

Hereby the elastic properties of the gum will not be as problematic as in prior art, where it may involve varying sizes of the pieces. Moreover the prior art adjustment of the gum rope speed to compensate for varying rope thickness which may lead to slackened sections of the gum rope may be avoided. Such slackened sections are not desired and may lead to varying amount of gum rope being fed to the piece-forming section, thereby varying the size of each piece. Moreover the slackened section may cause problems in passing the gum rope further on to the remaining part of the system.

With the steady and continuous motion according to the present invention, slackened sections of the gum rope may be avoided and the smooth movement into the piece-forming section leads to pieces of chewing gum, which are very similar in size.

A measurement of at least one geometrical characteristic e.g. the diameter of the gum rope is important because the variation of features of the raw material fed into the extruder may change the dimensions of the extruded rope if these variations are not compensated for by regulation of e.g. extruder speed.

Compared to other sectors of the food industry in general, the special characteristics of gum base in chewing gum provides for special care in controlling the geometrical characteristics of chewing gum. Due to both the plastic and elastic properties of gum base, special care should be taken when handling chewing gum.

A measurement of a geometrical characteristic such as the diameter is important to ensure that individual pieces of chewing gum are uniform, as general handling and packaging of the chewing gum is facilitated by equal sizes of the chewing gum. Moreover the costumer expects each piece of chewing gum to be uniform and as such it may be a source of irritation to the costumer to notice a difference between the individual pieces of chewing gum.

According to different embodiments of the invention the data related to at least one of said geometrical characteristics may be the width and/or the height and/or the weight, diameter, radius etc. of the gum rope. In an advantageous embodiment the data related to at least one of said geometrical characteristics is the diameter of the gum rope.

The present invention is in particular advantageous when the chewing gum is center-filled. In this case, uniformity is even more important as to avoid liquid filling leaking out of the gum rope or individual pieces of liquid-filled chewing gums. Moreover a variation between the individual pieces may be more noticeable to the customer due to the unique liquid-escaping initial phase of chewing a center-filled chewing gum, which may be affected by size variation of the individual pieces.

The special characteristics of gum base in chewing gum provides for even more care when center-filled chewing gum is employed. Due to both the plastic and elastic properties of gum base, special care should be taken when handling center-filled chewing gum.

In an embodiment of the invention the regulation of said at least one geometrical characteristics of said gum rope induces a modified value of said at least one geometrical characteristics of said gum rope as measured by said at least one measuring apparatus.

In an embodiment of the invention an oil based lubricant is used to prevent the gum rope from sticking to members of the gum-forming mechanism, e.g. the roller members and the table member.

In some prior art systems solely talcum and/or other powders are used to prevent the gum rope from sticking to members of the gum-forming mechanism. However in order to maintain necessary amounts of powder at the right places in the process, manual labour-consuming continuous supply of powder may be required. Moreover the huge amount of powder affects the physical work environment negatively with dusty air irritating especially the eyes and the respiratory passages.

Therefore according to advantageous embodiments of the present invention, prevention of sticking is sought through the use of oil based lubricants either alone or in combination with other agents, such as talcum.

The oil based lubricant may comprise one or more different kinds of oil possibly in a mixture with water.

The oil based lubricant may be sprayed directly onto the surface of the gum rope or directly onto the members of the table, manually or at one or more spraying stations on the gum-forming mechanism. For instance the punch faces can be sprayed with an oil or oil-based material to reduce the tendency of the gum material to stick to them.

In various embodiments of the invention, the conveyor used may be chosen from a number of suitable conveyors known in the art.

In an advantageous embodiment of the invention the gum rope extruded from the extruder is fed past a measuring apparatus by means of an air conveyor which utilizes streams of pressurized air.

The use of an air conveyor instead of a conventional conveyor system excel in the fact that less or no contact between the gum rope and the conveyor belt is present between the extruder and the measuring apparatus due to the air support of the gum rope. Hence a source of deformation of the gum rope is avoided and the gum rope will have a more regular shape when passing the measuring apparatus. Thereby the measurement of the geometrical characteristics may be obtained in greater detail resulting in a more precise adjusting of the extruder speed.

The air conveyor may be built according to various techniques known in the art in order to facilitate less physical contact between the conveyor and the gum rope.

In an embodiment of the invention said gum rope is at least partly lifted by air during passage on said air conveyor.

According to embodiments of the invention, physical contact with the gum rope is lessened before measurement and in one advantageous embodiment no physical contact is present with the gum rope between the extruder and the measuring apparatus.

In an embodiment of the invention said conveyor comprises a measuring reference for the measuring apparatus.

Some measuring apparatuses may need a measuring reference to establish improved measuring precision.

The measuring reference may be established by a number of suitable surfaces capable of establishing a fixed surface on which the lower side of the gum rope may slide.

In an embodiment of the invention said measuring reference comprises a roller.

According to an embodiment of the invention, a roller is integrated in the air conveyor to make a measuring reference for the measuring apparatus.

The lower side of the gum rope will flush the upper part of the roller, thereby establishing a suitable measuring reference for the measuring apparatus. After passing the roller, the gum rope is again lifted by air until reaching the table member. Hereby the contact between the roller and the gum rope is kept to a minimum sufficient to ensure that contact will be there, but the risk for deformation of the gum rope will be very low.

In a preferred embodiment of the invention, the roller is made from stainless steel.

According to an embodiment of the invention a roller integrated in the air conveyor may help to feed the gum rope along the air conveyor. This may be done by applying a drive mechanism e.g. an electrical motor to the roller which allows the roller to rotate around its own horizontal axis.

In an advantageous embodiment the gum rope is in physical contact solely with the measuring reference between the extruder and the table member.

In an embodiment of the invention said conveyor comprises side members.

According to an embodiment of the invention side members are integrated into the air conveyor. The side members are used to guide the gum rope, which is lifted by air, from the extruder to the gum-forming mechanism. Furthermore the side members ensure that the gum rope always enters the gum-forming mechanism at the same point. Obviously too much direct contact between the gum rope and the sides should be avoided in order to maintain the shape of the gum rope.

Moreover in some embodiments of the invention, further streams of pressurized air may also be provided on the side members in order to guide the gum rope further without physical contact.

According to an embodiment of the invention the side members may be adjusted to guide gum ropes with different diameter.

In an embodiment of the invention said extruder is suitable for extruding a center-filled gum rope having geometrical characteristics.

According to an advantageous embodiment of the invention, the gum rope is made center-filled before leaving the extruder.

Because of the elastic properties of the gum material, which the gum rope is made of, the gum rope may tend to expand just after the gum rope has been extruded from the extruder. This tendency increases when increasing the extruder speed and thereby the extruder speed affects the gum rope diameter. Therefore, in an advantageous embodiment of the invention, the extruder speed is regulated based on feedback from the measuring apparatus which measures the diameter of the gum rope.

Extruder speed in this context is meant to indicate the velocity of the extruder screw or screws. A regulation of this extruder speed will result in a corresponding regulation of the force on the gum composition in the extruder towards the extruder die. Thereby a higher extruder speed results in that the gum composition is set under increased pressure prior to leaving the extruder.

In an embodiment of the invention said system comprises no cooling means for cooling the gum rope prior to the piece-forming section.

Some prior art systems use cooling with cooled air or nitrogen gas during the movement of the gum rope on the table member. However this use of cooling is disadvantageous in that the gum rope may become too plastic and hard before entering the piece-forming section. Hereby the subdivision of the gum rope into individual chewing gum pieces is made more difficult, in that the material is harder to process when cooled. Hence, in particular, there will be a lessened risk that the center-filling will escape the chewing gum pieces, when no cooling has been applied to the gum rope prior to entering the piece-forming section. The cooling may be avoided according to embodiments of the present invention by using an oil or oil-based material to reduce the tendency of the gum material to stick to the elements of the system. Hereby cooling costs may furthermore be reduced.

In an embodiment of the invention an additional measuring apparatus provides further information on said gum rope.

In an embodiment of the invention said additional measuring apparatus is capable of establishing the amount of center-filling.

The amount of center-filling in the gum rope may be determined as described in the detailed description.

In an embodiment of the invention said measuring apparatus and said extruder are directly connected with respect to communication.

According to an embodiment of the invention it may be advantageous to have a direct electrical connection between the extruder and the measuring apparatus in order to provide the above-mentioned feedback with an even shorter response time.

In an embodiment of the invention said measuring apparatus uses sound waves to determine said geometrical characteristics.

In some embodiments of the invention the sound waves used are ultrasonic sound waves. Ultrasonic sound waves to be used will typically be sound waves with a frequency above 20 kHz.

In some embodiments of the invention the measuring apparatus may comprise a vision system. Hence measuring the geometrical characteristics of the gum rope may be performed by the vision system e.g. three dimensional and e.g. combined with quality control of the gum rope.

In an embodiment of the invention said measuring apparatus uses electromagnetic waves to determine said geometrical characteristics.

According to an embodiment of the invention the electromagnetic waves is light such as infrared light with wavelengths below 1 mm.

According to various embodiments of the invention, the measuring apparatus may be a reflecting type, a non-reflecting type, or a capacitive type.

In an embodiment of the invention said measuring apparatus is an integrated part of said air conveyor.

According to an embodiment of the invention the measuring apparatus is integrated in the construction of the air conveyor. This may lead to a more easy calibration and implementation of the air conveyor when the air conveyor and the measuring apparatus form only one unit.

According to various embodiments of the invention, the control system may be analogue or digital

According to an embodiment of the invention the control system may be implemented as an integrated circuit, which e.g. may be a combination of more than one integrated circuit or combined with an electrical circuit.

According to an embodiment of the invention the integrated circuit may e.g. be a digital signal processor or a microcontroller.

According to various embodiments of the invention, the control system may have a lay-out comprising a closed-loop and/or an open-loop. The closed-loop layout may comprise a feedforward loop and/or a feedback loop.

In an embodiment of the invention said control system is designed as a single-input single-output system.

According to an embodiment of the invention the measuring apparatus comprises only one input to the control system.

According to an embodiment of the invention the control system comprises only one output by which the extruder is controlled.

According to an embodiment of the invention said control system is designed as a multi-input multi-output system.

According to an embodiment of the invention the measuring apparatus comprises more than one input to the control system.

According to an embodiment of the invention the control system comprises more than one output by which the extruder is controlled.

According to an embodiment of the invention any combination of input and output is used to control the extruder.

According to various embodiments of the invention the control strategy of said control system may be adaptive control, robust control, optimal control, intelligent control or combinations hereof.

According to an embodiment of the invention the control system is based on any combination of neural networks, Bayesian probability, fuzzy logic, machine learning, evolutionary computation, genetic algorithms, PID or the individual Proportional, Integral or Differential regulation theories.

In an embodiment of the invention said system for producing pieces of chewing gum comprises gum-forming mechanisms.

The term gum-forming mechanisms in this context include any mechanism included after the measuring section, i.e. the mechanisms of the gum-forming section, the piece-forming section and the post-treatment section.

In an embodiment of the invention said system for producing pieces of chewing gum comprises a scaling section.

In an embodiment of the invention said system for producing pieces of chewing gum comprises a piece-forming section.

In an embodiment of the invention said system for producing pieces of chewing gum comprises a post-treatment section.

According to an embodiment of the invention the post-treatment section may e.g. be a or a combination of a conveyor, polisher, coater, dryer, cooler, packing section or any other section for post treating the output from the piece forming section.

In an embodiment of the invention said system further comprises a feed chute means for introducing said gum rope into said piece-forming section.

In an embodiment of the invention said feed chute means includes the use of compressed air to assist in the movement of the gum rope through the feed chute and into said piece-forming section.

In an embodiment of the invention a filling of said center-filled gum rope comprises components selected from the group comprising syrups, pastes, powders, and mixtures thereof.

In an embodiment of the invention a filling of said center-filled gum rope comprises at least one sweetener and/or at least one flavor.

According to an embodiment of the invention, the filling of said center-filled gum rope comprises at least one sweetener selected from the group comprising mannitol, xylitol, hydrogenated starch hydrolysates, maltitol, isomaltol, erythritol, lactitol, sucrose, dextrose, maltose, dextrins, trehalose, D-tagatose, invert sugar, fructose, levulose, galactose, corn syrup, sucralose, aspartame, salts of acesulfame, alitame, neotame, twin sweet, saccharin and its salts, cyclamic acid and its salts, isomalt, dihydrochalcones, glycyrrhizin, dihydrochalcones, thaumatin, monellin, talin, stevioside, and mixtures thereof.

According to an embodiment of the invention, the filling of said center-filled gum rope comprises at least one flavor selected from the group consisting of essential oils, fruit flavors, peppermint, spearmint, wintergreen, cinnamon, lemon, orange, lime, grapefruit, grape, strawberry, pineapple, cherry, apple, and mixtures thereof.

Moreover the invention relates to a method of continuously producing pieces of center-filled gum material comprising the steps of:
extruding from an extruder a gum rope of center-filled gum material having geometrical characteristics;
conveying said gum rope from said extruder to said at least one measuring apparatus on an air conveyor;
measuring data related to at least one of said geometrical characteristics by at least one measuring apparatus;
regulating said at least one geometrical characteristics of said gum rope by controlling the extruder speed on the basis of said measured data by a control system; and
forming said gum material into separate pieces of sealed gum material.

In an embodiment of the invention the regulation of said at least one geometrical characteristics of said gum rope induces an amended value of said at least one geometrical characteristics of said gum rope as measured by said at least one measuring apparatus.

### BRIEF DESCRIPTION OF THE DRAWINGS

The invention will now be described with reference to the drawings, of which
Fig. 1 schematically illustrates a continuous center-filled gum-forming system in accordance with an embodiment of the present invention;
Fig. 1A is a cross-sectional view of the center-filled gum material;
Fig. 2 illustrates the air conveyer and the measuring apparatus;
Fig. 2A illustrates a block diagram of a control system; and
Fig. 3 depicts a part of a gum-forming mechanism in accordance with the present invention.

### DETAILED DESCRIPTION

The present invention may find use in a number of embodiments. One advantageous embodiment is in manufacturing center-filled chewing gum. The invention will now be described with reference to this embodiment.

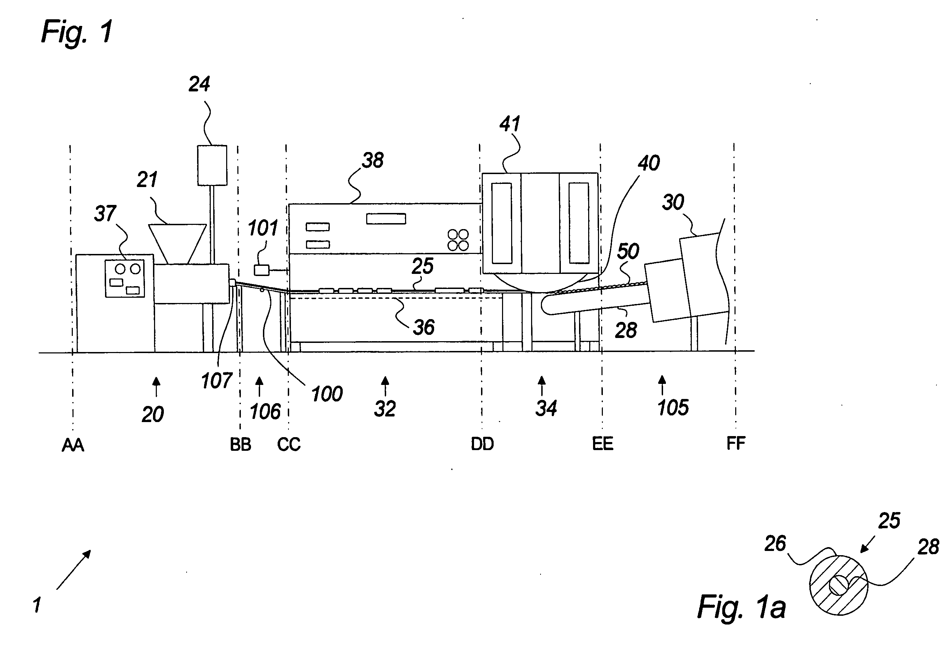

Figure 1 illustrates the whole gum-forming mechanism 1 in an embodiment of the invention including an extruder 20, a measuring section 106, a scaling section 32, piece-forming section 34 and a post-treatment section 105.

The extruder 20 may be of any conventional type and includes a chewing gum filling input 24 and a chewing gum composition input 21. A control panel 37 for adjusting the extruder 20 settings or advantageously the whole system is in the shown embodiment shown on the side of the extruder; however this could be positioned in any suitable place. The chewing gum filling input 24 is utilized to insert a liquid or softer material in the center of the extruder output, which in this preferred embodiment of the invention is a gum rope 25. Mechanisms to form center-fill gum and other confectionery products from an extruder are known in the art and the skilled person may find the present invention useful for a number of these.

The part of figure 1 between line AA and BB illustrates the extruder 20, which may be any suitable extruder known in the art. Shortly explained, the extruder forms a gum rope with the substantially same geometrical characteristics as the extruder die 107 by forcing a chewing gum composition through said extruder die 107. The forcing and a blending of the chewing gum composition are carried out in one step by a screw propelled by a screw drive motor forcing the composition towards the extruder die 107.

Obviously such an extruder process will bring the chewing gum composition under pressure during the extrusion process, and the pressure will be dependent on extruder speed. Most chewing gum compositions are elastic by nature and therefore, when the gum rope is extruded from the extruder and returned to atmospheric pressure, it may tend to expand. As a consequence, the degree of expansion of the extruded gum rope may depend on the extruder speed.

According to the present invention the extruder speed may be controlled with high precision dependent on the measured geometrical characteristic of the gum rope, which will be directly linked to the expansion of the gum rope. Hereby a very uniform resulting gum rope may be obtained as compared to prior art gum ropes.

The part of figure 1 between line BB and CC illustrates a measuring section 106, which in the illustrated embodiment of the invention comprises a conveyor 100 which according to the present invention may be e.g. a conventional belt, roller or air conveyor or any other suitable conveyor, and a measuring apparatus 101. In this disclosed embodiment in the figures, the conveyor is an air conveyor, which is preferred in order to lessen contact of the conveyor with the gum rope with resulting deformation.

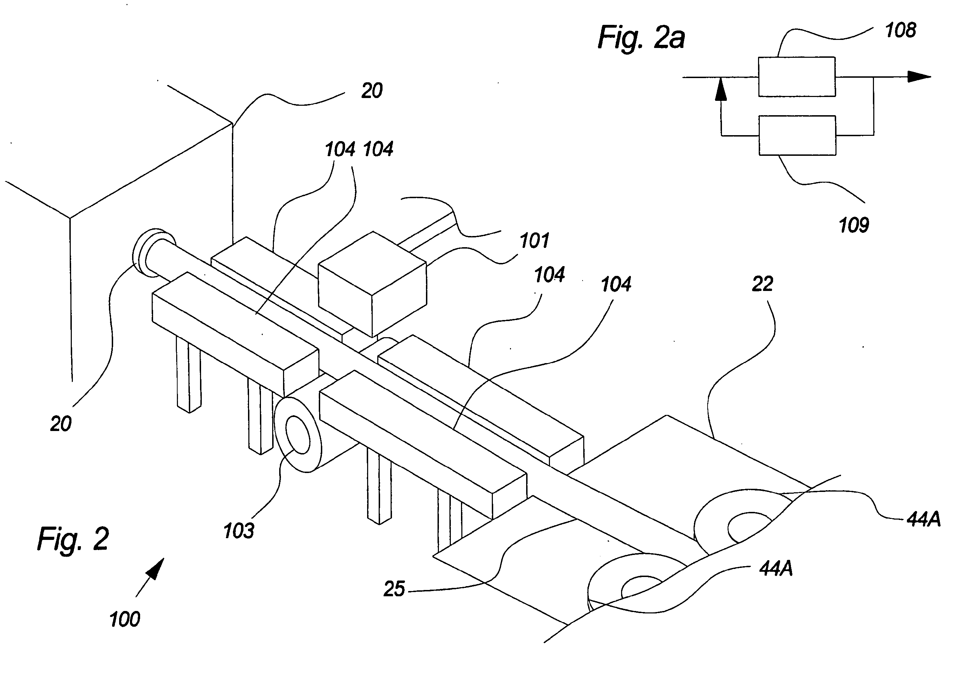

Measured data related to at least one geometrical characteristic e.g. the diameter of the extruded gum rope 25 is measured by means of the measuring apparatus. Other geometrical characteristic may e.g. be the width or height, which could be used if the shape of the gum rope is not circular. In a preferred embodiment of the invention the height of the gum rope is measured, which in the embodiment with a circular gum rope corresponds to the diameter. This measured data is in a backwards control loop feed from the measuring apparatus to the control system of the extruder, to obtain a substantial uniform output of the extruder despite e.g. changes in the chewing gum composition. The measuring section 106 is described more detailed in figure 2.

In an embodiment of the invention the measuring section 106 may be part of the extruder 20. This embodiment may be useful if the used chewing gum composition is not prone to expansion. In such an embodiment of the invention the output of the extruder may be a gum rope 25 regulated to a desired geometrical characteristics already at exiting the extruder die 107. However it is noted that a number of chewing gum compositions will be prone to expansion and hence in most embodiments it will be advantageous to have at least a small distance for the gum rope to travel at atmospheric pressure before measuring the geometrical characteristic.

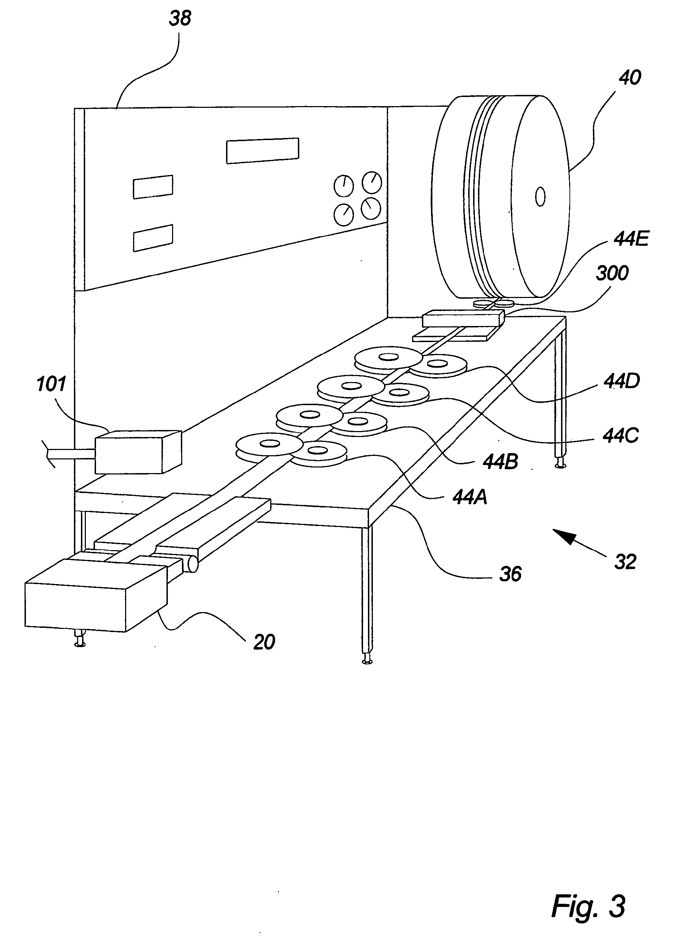

The scaling section 32 between line CC and DD illustrates a table member 36 comprising means for scaling the gum rope 25 according to a predefined shape e.g. down scaling the gum rope so that when the gum rope 25 leaves the table member 36 the diameter is smaller than when the gum rope entered the table member 36. The scaling section 32 is described more in detail in relation to figure 3.

In an embodiment of the invention at least one further measuring apparatus 300 may be implemented in or added to the scaling section 32. A further measuring apparatus 300 may e.g. be located at any position between the area where the gum rope first enters the table member 36 and the area where the gum rope 25 leaves the scaling section 32. The scaling section 32 may in this embodiment of the invention add a further adjusting parameter to the invention.

In the embodiment shown in the figures, the further measuring apparatus 300 is used to determine the amount of center-filling in the gum rope. The system has values of the density of the gum composition and of the center-filling, whereby a measurement of the weight of the gum rope can be directly calculated into the amount of center-filling in the gum rope 25 before entering the piece-forming section 34. If it turns out that this amount of center-filling deviates slightly, a feedback loop may adjust the amount of center-filling added to the gum rope 25 in the extruder 20. Within the scope of the invention, this further measuring apparatus may be used for other purposes; or even more measuring apparatuses may be used in combination.

The part of figure 1 between line DD and EE illustrates the piece-forming section 34, which in a preferred embodiment of the invention divides the gum rope 25 into interconnected or individual separated pieces of chewing gum 50. The piece-forming section 34 may be built as described in WO 2007/106055 . This includes a rotating drum mechanism 40 and a cover 41 for this.

The part of figure 1 between line EE and FF illustrates a post-treatment section 105 which may comprise more than one module for treatment of the output from the piece-forming section 34. In the illustrated embodiment of the invention the post-treatment section 105 comprising a conveyor module 28 and a cooling tunnel 30.

The post-treatment section 105 may comprise one or more different post-treatments of the output from the piece-forming section 34 e.g. conveying, polishing, coating, drying, cooling, packing or any other post-treatment for the output from the piece-forming section 34. In particular interconnected pieces of chewing gum may in this step be separated completely, which is preferably done after cooling has been applied resulting in a less soft chewing gum.

Figure 1A illustrate a cross sectional view of the extruded gum rope 25. The gum rope 25 includes an outer core or shell 26 of chewing gum or bubble gum material and an inner core 28 of a liquid or softer material. In this regard, centers of liquid-filled gum products are flavored and typically have a liquid or a syrup-like consistency.

Within the context of the present invention, the term center-filled covers that the chewing gum comprises an inner core of liquid or softer material. The inner core does not necessarily have to be located precisely in the center of the individual piece of chewing gum and the location of the liquid or softer material may vary between individual pieces of chewing gum.

Figure 2 illustrates an enlarged view of the air conveyor 100 and the measuring apparatus 101. In a preferred embodiment of the invention the gum rope 25 is extruded from the extruder 20 and fed to the scaling section 32 via the air conveyor 100. Giving that the air from the air conveyor at least partly lifts the gum rope, a more precise measurement is obtained when the gum rope passes the measuring apparatus 101.

By using conventional conveyors such as e.g. a belt instead, gravity on the gum rope may pull down the gum rope towards the belt of the conventional conveyor and thereby deform the gum rope 25 because of the elastic appearance of the material of the gum rope. Therefore the physical contact between the gum rope 25 and the conveyor 100 is preferably lessened, e.g. by the use of an air conveyor.

Beneath the measuring apparatus 101 a roller 103 is located to ensure that the distance from the lower side of the gum rope to the measuring apparatus is kept constant.

An exact determination of the diameter or other geometric characteristics is advantageous according to the present invention. This will namely lead to improved possibilities of minimizing size variation despite e.g. variations in the gum material extruded from the extruder and/or in the temperature around the measuring apparatus. By more similar sizes, handling of the chewing gum pieces is made easier in the remaining part of the process. Moreover the customer may find pleasure in finding each piece of chewing gum being substantially the same size each time a new packet of chewing gum is opened. Moreover, with minimal size variation fewer pieces of chewing gum are discarded resulting in an improved process economy.

In a preferred embodiment of the invention the air conveyor 100 comprises side members 104. The side members are used to guide the gum rope 25 so that the gum rope follows a predetermined path from the extruder 20 to the scaling section 32. The side members 104 may in an embodiment of the invention be both vertically and horizontally movable. This feature may be introduced to the side members so that the conveyor 100, such as an air conveyor, may be used to guide gum rope 25 of different sizes.

Figure 2A illustrates a block diagram of one among a plurality of possible control systems of the extruder by which a substantial uniform geometrical characteristics e.g. the shape and diameter of the gum rope / output of the extruder 20 may be obtained.

The first block 108 represents the transfer function of the control system of the extruder 20 and the second block 109 in the control loop represents measured data related to geometrical characteristics from the measuring apparatus 101, of the output from the extruder.

Explained in simple manners the feedback measurement in block 109 is in an embodiment of the invention a measurement of the actual geometrical characteristics, e.g. the diameter of the output of the extruder 20. This feedback is added to the input to the transfer function in block 108 of the extruder, which then compensates for any measured deviation from the desired geometrical characteristics e.g. the diameter of the output of the extruder.

In one embodiment of the invention the compensation is carried out by increasing or decreasing the force of which the gum rope 25 is extruded from the extruder 20, but other means may also be used to carry out the compensation, e.g. regulating the extruding speed or the size of the extruder die 107.

The transfer function of the control system of the extruder 20 may include a regulating part which may be based on any known regulating or modelling techniques both analogue and/or digital. The regulating part may in an embodiment of the invention physically be implemented e.g. as electrical circuits, digital signal processors and/or microcontrollers.

The control system used to regulate the output of the extruder 20 may be based on any known control circuit layouts including open-loop or closed-loop circuits with feedforward or feedback and may be implemented or designed as single-input single-output or multi-input multi-output systems.

The control algorithm itself may be based on main control strategies such as e.g. adaptive control, robust control, optimal control, intelligent control including e.g. neural networks, Bayesian probability, fuzzy logic, machine learning, evolutionary computation, genetic algorithms, PID or the individual Proportional, Integral or Differential regulation theories.

The measuring apparatus may in an embodiment of the invention be implemented as a vision system including one or more cameras. By implementing a vision system it is, apart from measuring the three dimensional appearance of the gum rope including the diameter, also possible to perform a quality control of the gum rope by comparing e.g. the colour or surface of the gum rope, recorded by a vision camera, with pre-stored reference data in the vision system.

The mentioned control layouts, strategies and systems may be combined in a plurality of ways to obtain a control system which offers the most optimal control of the gum-forming machine 1.

As explained the measurements taken by the measuring apparatus 101 are fed into the control system and the extruder speed is adjusted accordingly in order to provide the proper size, diameter and amount of gum material entering the piece-forming section 34. The gum rope is reduced approximately 50-75% in size (diameter) from the time it is extruded from the extruder 20 to the time it enters the piece-forming section 34. For example a reduction from 2.5 cm to 1.0 cm in diameter of the gum rope 25 may be used.

The measuring apparatus 101 may be of any known type, measuring by means of e.g. electromagnetic and/or sound waves, reflecting and/or non-reflecting.

Figure 3 shows the measuring section 106, the scaling section 32 and the piece-forming section 34 comprising a rotating drum mechanism 40 which continuously forms pieces of liquid-filled gum.

The scaling section 32 includes a table member 36 and optionally a control panel 38. The table member 36 has series of pairs of roller members 44A, 44B, 44C, 44D, and 44E positioned along the surface of the table. The gum rope 25 is pulled gently along the table member 36 by the roller members 44A-E, and then by the rotating drum mechanism 40 once the process is in full operation. The sets or pairs of roller members 44A, 44B, 44C, and 44D assist in sizing and transporting the gum rope 25 along the top of the table member 36. The final set of roller members 44E at the end of the scaling section 32 are used to guide the gum rope into the piece-forming section 34. Obviously within the scope of the invention, the number of pairs of roller members may be in- or decreased depending on the specific needs.

The series of pairs of roller members 44A-44D are designed to provide an advantageous sizing and transporting of the gum rope 25, which according to the embodiment shown in fig. 3 involves an U-shaping of the rims, in which one encloses the other. In this way a circular shaping of the gum rope is facilitated throughout the sizing of the gum rope through the roller members 44A-44D.

In an embodiment of the invention an oil-based lubricant is used to prevent the gum rope 25 from sticking to members of the scaling section 32 e.g. the roller members 44A-E and the table member 36.

A fine mist of a food grade oil or an oil-based material may be sprayed directly onto the surface of the gum rope 25 or directly onto the members of the table 36, manually or at one or more spraying stations (not shown) on the table member 36. The oil temporarily reduces or eliminates the stickiness of the gum material and may according to embodiments of the invention allow the gum rope 25 to be guided through the system without the need to cool with cooled air or nitrogen gas.

In another embodiment of the invention talcum is used to prevent the gum rope 25 from sticking to members of the gum-forming mechanism, instead of or in combination with the oil based lubricant. The talcum may, as the oil based lubricate, be distributed onto the surface of the gum rope or direct on the members of the table member 36.

The gum rope 25 then enters the individual piece-forming section 34, in which the gum rope is cut into individual pieces of chewing gum, e.g. by the method described in WO 2007/106055, in which die half members on a die ring member and on a cutter ring member, respectively, mate together to form dies or molds for formation of the individual pieces of gum products.

In this way, the gum rope is cut into individual pieces or a rope of individual pieces at the area or portion where the two mating semi-circular die groove members come together forming circular dies. Thereafter, the cut pieces of gum material are held in place and compressed by cam operated plunger members, as the individual pieces continue their rotation around the die ring member until they are stripped or removed there from and continue towards possible post-treatment such as conveying, polishing, coating, drying, cooling, packing or any other post-treatment.

In an advantageous embodiment of the invention, a feed chute member provides conveyance of the gum rope 25 from the forming and scaling section 32 to the piece-forming section 34 on the drum member in the system. The feed chute member may be found advantageous in conveying the end of the extruded rope member 25 and inserting it into position between the diverging die half members on the die ring and cutter ring members.

In an advantageous embodiment of the invention, the gum rope 25 is pulled and assisted through the feed chute member by "jets" or streams of pressurized air. In this regard, pressurized air is introduced through openings into opposite inside walls of the housing member which act to pull along the gum rope 25 through the housing member.

It should be understood according to the invention that the procedures from entering the piece-forming section 34 and passing the post-treatment section 105 can be carried out in any known way by the person skilled in the art, advantageous examples of actions in such sections are shown in WO 2007/106055, from which the skilled person would easily find a number of methods to manufacture suitable piece-forming and post-treatment sections.

In an embodiment of the present invention, the center-filling of the chewing gum is added to the gum composition through a pin in the extruder. The pin is connected to a flowmeter, which regulates the amount of center-filling to pass the pin. The flowmeter automatically regulates the amount of center-filling in accordance with the extruder speed. Moreover it may be given information on small adjustments in the amount of center-filling from the optional additional measuring apparatus (300).

In another embodiment of the present invention, the gum material used for the rope of liquid-filled gum material is subjected to two extrusion procedures. In the first procedure, the gum material is manufactured and extruded in flat sheets of material where it is uniformly coded. Thereafter, the material is introduced into a second extruder which reshapes it into a rope of material.

The basic platform for use with the extruder mechanism 20 and gum-forming mechanism can be a typical candy forming machine manufactured by Bosch, Hansella, Executive, Euromec, and others. The extruder 20 can be of any conventional type. In the extrusion machine, previously processed gum material is introduced into the chewing gum composition input 21 (see Figure 1) and then into a single or pair of rotating screw members which massage the gum material and extrude it through a die in the form of a gum rope.

The present invention provides an improved continuous manufacturing system for liquid- or center-filled gum. Uniformity of the resulting pieces of liquid-filled chewing gum is improved and in a steadier, smoother, and more reliable process than the known processes. Moreover discard rates are diminished and as a result of this, process economy is improved.

While particular embodiments of the invention have been shown and described, numerous variations and alternate embodiments will occur to those skilled in the art. Accordingly, it is intended that the invention be limited only in terms of the appended claims.

## Claims

1. A system (1) for producing pieces of center-filled chewing gum comprising:
an extruder (20),
at least one measuring apparatus (101), and
a control system,
wherein said extruder (20) is suitable for extruding a gum rope (25) having geometrical characteristics,
wherein said at least one measuring apparatus (101) is suitable for measuring data related to at least one of said geometrical characteristics of said extruded gum rope (25),
wherein said control system is adapted to regulate, on the basis of said measured data, at least one geometrical characteristics of said gum rope (25) by controlling the extruder speed,
wherein said system (1) comprises a conveyor (100) for conveying said gum rope (25) between said extruder (20) and said at least one measuring apparatus (101), and wherein said conveyor (100) is an air conveyor.

2. System according to claim 1, wherein the regulation of said at least one geometrical characteristics of said gum rope (25) induces a modified value of said at least one geometrical characteristics of said gum rope (25) as measured by said at least one measuring apparatus (101).

3. System according to claim 1 or 2, wherein an oil based lubricant is used to prevent the gum rope (25) from sticking to members of the gum-forming mechanism, e.g. the roller members (44A-E) and the table member (36).

4. System according to any of the claims 1-3, wherein said gum rope (25) is at least partly lifted by air during passage on said air conveyor (100).

5. System according to any of the claims 1-4, wherein said conveyor (100) comprises a measuring reference for the measuring apparatus (101), such as a roller (103).

6. System according to any of the claims 1-5, wherein said conveyor (100) comprises side members (104).

7. System according to any of the claims 1-6, wherein said system comprises no cooling means for cooling the gum rope (25) prior to the piece-forming section (34).

8. System according to any of the claims 1-7, wherein an additional measuring apparatus (300) provides further information on said gum rope (25), such as said additional measuring apparatus (300) is capable of establishing the amount of center-filling.

9. System according to any of the claims 1-8, wherein said measuring apparatus (101) and said extruder (20) are directly connected with respect to communication.

10. System according to any of the claims 1-9, wherein said measuring apparatus (101) uses sound waves and/or electromagnetic waves to determine said geometrical characteristics.

11. System according to any of the claims 1.10, wherein said measuring apparatus (101) is an integrated part of said air conveyor.

12. System according to any of the claims 1-11, wherein said system (1) for producing pieces of chewing gum comprises at least one selected from the group consisting of gum-forming mechanisms, a scaling section (32), a piece-forming (34) section, and a post-treatment section (105).

13. System according to claim 12, wherein said system (1) further comprises a feed chute means for introducing said gum rope (25) into said piece-forming section (34), wherein preferably said feed chute means includes the use of compressed air to assist in the movement of the gum rope through the feed chute and into said piece-forming section (34).

14. A method of continuously producing pieces of center-filled gum material comprising the steps of:
extruding from an extruder (20) a gum rope (25) of center-filled gum material having geometrical characteristics;
conveying said gum rope (25) from said extruder (20) to said at least one measuring apparatus (101) on an air conveyor (100);
measuring data related to at least one of said geometrical characteristics by at least one measuring apparatus (101);
regulating said at least one geometrical characteristics of said gum rope (25) by controlling the extruder speed on the basis of said measured data by a control system; and
forming said gum material into separate pieces of sealed gum material.

15. Method according to claim 14, wherein the regulation of said at least one geometrical characteristics of said gum rope (25) induces an amended value of said at least one geometrical characteristics of said gum rope (25) as measured by said at least one measuring apparatus (101).

## Patentansprüche

1. System (1) zur Herstellung von Stücken aus mittig gefülltem Kaugummi, Folgendes umfassend:
einen Extruder (20),
wenigstens eine Messvorrichtung (101), und
ein Steuerungssystem,
wobei der Extruder (20) dazu geeignet ist, einen Kaugummistrang (25) zu extrudieren, der geometrische Eigenschaften hat,
wobei die wenigstens eine Messvorrichtung (101) dazu geeignet ist, Daten zu messen, die sich auf wenigstens eine der geometrischen Eigenschaften des extrudierten Kaugummistrangs (25) beziehen,
wobei das Steuerungssystem dafür eingerichtet ist, basierend auf den gemessenen Daten wenigstens eine geometrische Eigenschaft des Kaugummistrangs (25) einzustellen, indem die Extrudergeschwindigkeit gesteuert wird,
wobei das System (1) eine Fördereinrichtung (100) zur Beförderung des Kaugummistrangs (25) zwischen dem Extruder (20) und der wenigstens einen Messvorrichtung (101) umfasst und wobei die Fördereinrichtung (100) ein Luftförderer ist.

2. System nach Anspruch 1, wobei das Einstellen der wenigstens einen geometrischen Eigenschaft des Kaugummistrangs (25) einen veränderten Wert der wenigstens einen geometrischen Eigenschaft des Kaugummistrangs (25) bewirkt, so wie diese von der wenigstens einen Messvorrichtung (101) gemessen wird.

3. System nach Anspruch 1 oder 2, wobei ein ölbasiertes Schmiermittel dazu verwendet wird zu verhindern, dass der Kaugummistrang (25) an Elementen
der kaugummibildenden Vorrichtung, beispielsweise den Rollenelementen (44A-E) und dem Tischelement (36), kleben bleibt.

4. System nach einem der Ansprüche 1 bis 3, wobei der Kaugummistrang (25) während des Durchgangs auf dem Luftförderer (100) wenigstens teilweise durch Luft angehoben wird.

5. System nach einem der Ansprüche 1 bis 4, wobei die Fördereinrichtung (100) eine Messreferenz für die Messvorrichtung (101), wie etwa eine Walze (103), umfasst.

6. System nach einem der Ansprüche 1 bis 5, wobei die Fördereinrichtung (100) Seitenelemente (104) umfasst.

7. System nach einem der Ansprüche 1 bis 6, wobei das System kein Kühlungsmittel umfasst, um den Kaugummistrang (25) vor dem stückbildenden Abschnitt (34) zu kühlen.

8. System nach einem der Ansprüche 1 bis 7, wobei eine zusätzliche Messvorrichtung (300) eine weitere Information über den Kaugummistrang (25) bereitstellt, etwa derart, dass die zusätzliche Messvorrichtung (300) dazu geeignet ist, die Menge an Füllmaterial festzustellen.

9. System nach einem der Ansprüche 1 bis 8, wobei die Messvorrichtung (101) und der Extruder (20) direkt miteinander kommunizieren können.

10. System nach einem der Ansprüche 1 bis 9, wobei die Messvorrichtung (101) zur Bestimmung der geometrischen Eigenschaften Schallwellen und/oder elektromagnetische Wellen verwendet.

11. System nach einem der Ansprüche 1 bis 10, wobei die Messvorrichtung (101) ein integrierter Teil des Luftförderers ist.

12. System nach einem der Ansprüche 1 bis 11, wobei das System (1) zur Herstellung von Kaugummistücken wenigstens ein Element umfasst, das aus der folgenden Gruppe gewählt ist: eine kaugummibildende Vorrichtung, ein Skalierungsabschnitt (32), ein stückbildender Abschnitt (34) und ein Nachbearbeitungsabschnitt (105).

13. System nach Anspruch 12, wobei das System (1) außerdem ein Zuführungsmittel zum Einführen des Kaugummistrangs (25) in den stückbildenden Abschnitt (34) umfasst, wobei vorzugsweise das Zuführungsmittel den Einsatz von Pressluft umfasst, um die Bewegung des Kaugummistrangs durch das Zuführungsmittel hindurch in den stückbildenden Abschnitt (34) hinein zu unterstützen.

14. Verfahren zur kontinuierlichen Herstellung von Stücken aus mittig gefülltem Kaugummimaterial, das die folgenden Schritte umfasst:
Extrudieren eines Kaugummistrangs (25) aus mittig gefülltem Kaugummimaterial mit geometrischen Eigenschaften aus einem Extruder (20);
Befördern des Kaugummistrangs (25) vom Extruder (20) zu der wenigstens einen Messvorrichtung (101) auf einem Luftförderer (100);
Messen von Daten, die sich auf wenigstens eine der geometrischen Eigenschaften beziehen, durch wenigstens eine Messvorrichtung (101);
Einstellen der wenigstens einen geometrischen Eigenschaft des Kaugummistrangs (25) durch die Steuerung der Extrudergeschwindigkeit durch ein Steuerungssystem und basierend auf den gemessenen Daten; und
Formen des Kaugummimaterials in getrennte Stücke von verschlossenem Kaugummimaterial.

15. Verfahren nach Anspruch 14, wobei das Einstellen der wenigstens einen geometrischen Eigenschaft des Kaugummistrangs (25) einen veränderten Wert der wenigstens einen geometrischen Eigenschaft des Kaugummistrangs (25) bewirkt, so wie diese von der wenigstens einen Messvorrichtung (101) gemessen wird.

## Revendications

1. Système (1) pour produire des chewing-gums fourrés comprenant :
une extrudeuse (20),
au moins un appareil de mesure (101), et
un système de commande,
dans lequel ladite extrudeuse (20) est conçue pour extruder un cordon de chewing-gum (25) ayant des caractéristiques géométriques,
dans lequel ledit au moins un appareil de mesure (101) est conçu pour mesurer des données relatives à au moins l'une desdites caractéristiques géométriques dudit cordon de chewing-gum (25) extrudé,
dans lequel ledit système de commande est conçu pour réguler, sur la base desdites données mesurées, au moins l'une des caractéristiques géométriques dudit cordon de chewing-gum (25) en commandant la vitesse de l'extrudeuse,
dans lequel ledit système (1) comprend un transporteur (100) pour transporter ledit cordon de chewing-gum (25) entre ladite extrudeuse (20) et ledit au moins un appareil de mesure (101), et dans lequel ledit transporteur (100) est un transporteur pneumatique.

2. Système selon la revendication 1, dans lequel la régulation de ladite au moins une caractéristique géométrique dudit cordon de chewing-gum (25) induit une valeur modifiée de ladite au moins une caractéristique géométrique dudit cordon de chewing-gum (25) telle qu'elle est mesurée par ledit au moins un appareil de mesure (101).

3. Système selon la revendication 1 ou la revendication 2, dans lequel un lubrifiant à base d'huile est utilisé pour empêcher le cordon de chewing-gum (25) de coller sur des éléments du mécanisme de formation de chewing-gum, par exemple les éléments formant rouleaux (44A-E) et l'élément formant table (36).

4. Système selon l'une quelconque des revendications 1 à 3, dans lequel ledit cordon de chewing-gum (25) est au moins en partie soulevé par l'air pendant le passage sur ledit transporteur pneumatique (100).

5. Système selon l'une quelconque des revendications 1 à 4, dans lequel ledit transporteur (100) comprend une référence de mesure pour l'appareil de mesure (101), comme un rouleau (103).

6. Système selon l'une quelconque des revendications 1 à 5, dans lequel ledit transporteur (100) comprend des éléments latéraux (104).

7. Système selon l'une quelconque des revendications 1 à 6, dans lequel ledit système ne comprend aucun moyen de refroidissement pour refroidir le cordon de chewing-gum (25) avant la section de formation de chewing-gum (34).

8. Système selon l'une quelconque des revendications 1 à 7, dans lequel un appareil de mesure (300) supplémentaire fournit des informations supplémentaires sur ledit cordon de chewing-gum (25), par exemple ledit appareil de mesure (300) supplémentaire est capable d'établir la quantité de fourrage.

9. Système selon l'une quelconque des revendications 1 à 8, dans lequel ledit appareil de mesure (101) et ladite extrudeuse (20) sont directement raccordés pour pouvoir communiquer.

10. Système selon l'une quelconque des revendications 1 à 9, dans lequel ledit appareil de mesure (101) utilise des ondes sonores et/ou des ondes électromagnétiques pour déterminer lesdites caractéristiques géométriques.

11. Système selon l'une quelconque des revendications 1 à 10, dans lequel ledit appareil de mesure (101) fait partie intégrante dudit transporteur pneumatique.

12. Système selon l'une quelconque des revendications 1 à 11, dans lequel ledit système (1) pour produire des chewing-gums comprend au moins l'un des éléments suivants sélectionné dans le groupe composé des mécanismes de formation de chewing-gum, d'une section d'échelle (32), d'une section de formation de chewing-gum (34), et d'une section de post-traitement (105).

13. Système selon la revendication 12, dans lequel ledit système (1) comprend en outre un moyen formant goulotte d'alimentation pour introduire ledit cordon de chewing-gum (25) dans ladite section de formation de chewing-gum (34), dans lequel de préférence ledit moyen formant goulotte d'alimentation inclut l'utilisation d'air comprimé pour faciliter le mouvement du cordon de chewing-gum par la goulotte d'alimentation et dans ladite section de formation de chewing-gum (34).

14. Procédé pour produire en continu des chewing-gums fourrés comprenant les étapes consistant à :
extruder à partir d'une extrudeuse (20) un cordon de chewing-gum (25) constitué d'une matière à chewing-gum fourré ayant des caractéristiques géométriques ;
transporter ledit cordon de chewing-gum (25) depuis ladite extrudeuse (20) vers ledit au moins un appareil de mesure (101) sur un transporteur pneumatique (100) ;
mesurer des données relatives à au moins l'une desdites caractéristiques géométriques à l'aide d'au moins un appareil de mesure (101) ;
réguler ladite au moins une caractéristique géométrique dudit cordon de chewing-gum (25) en commandant la vitesse de l'extrudeuse sur la base desdites données mesurées au moyen d'un système de commande ; et
former ladite matière à chewing-gum en chewing-gums individuels constitués de matière à chewing-gum scellée.

15. Procédé selon la revendication 14, dans lequel la régulation de ladite au moins une caractéristique géométrique dudit cordon de chewing-gum (25) induit une valeur modifiée de ladite au moins une caractéristique géométrique dudit cordon de chewing-gum (25) telle qu'elle est mesurée par ledit au moins un appareil de mesure (101).
